# EUROPÄISCHE PATENTSCHRIFT

(11) **EP 2 077 452 B1**
(45) Veröffentlichungstag und Bekanntmachung des Hinweises auf die Patenterteilung: **24.11.2010**
(21) Anmeldenummer: 08100167.9
(22) Anmeldetag: 07.01.2008
(51) Int. Cl.: G01N 35/10

(54) **Reagenzienkassette**
Reagent cartridge
Cassette de réactifs

(43) Veröffentlichungstag der Anmeldung: 08.07.2009
(73) Patentinhaber: F.Hoffmann-La Roche AG, 4070 Basel (CH); Roche Diagnostics GmbH, 68305 Mannheim (DE)
(72) Erfinder: Steinböck, Wolf-Dietrich, 8020, GRAZ (AT); Hofmann, Wolfgang, 8055, GRAZ (AT)
(74) Vertreter: Babeluk, Michael

(56) Entgegenhaltungen:
- EP-A- 1 495 809
- WO-A-02/097414
- US-A- 3 929 413
- US-A1- 2004 047 771
- ECONOMOU A: "Sequential-injection analysis (SIA): A useful tool for on-line sample-handling and pre-treatment" TRAC, TRENDS IN ANALYTICAL CHEMISTRY, ELSEVIER, AMSTERDAM, NL, Bd. 24, Nr. 5, Mai 2005 (2005-05), Seiten 416-425, XP004874157 ISSN: 0165-9936
- FANG Z-L ET AL: "Continuous monitoring in drug dissolution testing using flow injection systems" TRAC, TRENDS IN ANALYTICAL CHEMISTRY, ELSEVIER, AMSTERDAM, NL, Bd. 18, Nr. 4, April 1999 (1999-04), Seiten 261-271, XP004223104 ISSN: 0165-9936

## Beschreibung

Die Erfindung betrifft eine Reagenzienkassette, welche austauschbar in einen Analysator einsetzbar ist und mehrere Reagenzienbeutel aufweist, wobei die Reagenzienbeutel mit Anschlussleitungen ausgestattet sind, die wahlweise einer Eingabeeinrichtung des Analysators zuschaltbar sind. Weiters betrifft die Erfindung einen Reagenzienbeutel mit einem in der Anschlussleitung angeordneten Ventil sowie ein Verfahren zum Betrieb eines Analysators, welcher eine Messkammer und eine austauschbare Reagenzienkassette aufweist.

Der Analysator kann beispielsweise als portabler Analysator zur Bestimmung von POC (Point Of Care) Parametern, nämlich der Blutgase (O₂, CO₂, pH), der Elektrolyte (K⁺, Na⁺, Ca⁺⁺, Cl⁻) der Metabolite (Glukose und Laktat), des Hämatokrits, der Hämoglobinparameter (tHb, SO₂, etc.) und Bilirubin ausgeführt sein, der zur dezentralen Bestimmung der genannten Parameter in Vollblutproben eingesetzt wird.

Bei der Problemstellung geht es um den Anschluss einer Mehrzahl von Reagenzienbeuteln an den Analysator, wobei alle Flüssigkeiten, d.h. sowohl die aus unterschiedlichen Probenahmegefäßen stammende Probe (z.B. Blut), allfällige externen Qualitätskontroll-Flüssigkeiten (QC-Flüssigkeiten) als auch die in den Reagenzienbeuteln einer Reagenzienkassette vorliegenden Funktionsflüssigkeiten, wie Kalibrier-, QC- Spül-, Desinfektions- und Reinigungsflüssigkeiten, bevorzugt über ein einziges Eingabeelement (z.B. Eingabenadel) in den Analysator gesaugt werden sollen.

Die zum Teil tonometrierten Funktionsflüssigkeiten sind in Reagenzienbeuteln (z.B. verschweißte laminierte Aluminiumbeutel) abgefüllt. Die Reagenzienbeutel sind in bekannten Anordnungen vor dem Einsatz in den Analysator jeweils mit einem Septum oder einem Ventil (Beutelventil) verschlossen, das beim Einsetzen in den Analysator irreversibel geöffnet und deren Inhalt zur Entnahme frei gegeben wird.

Dabei ist zu gewährleisten, dass es zu keinerlei "cross-contamination" der zu messenden Inhaltsstoffe der Proben- bzw. Kalibrier- und QC-Flüssigkeiten kommt. Ferner ist zu gewährleisten, dass die Gaszusammensetzung der tonometrierten Flüssigkeiten in den Beuteln bzw. in den Leitungen sowohl im Betrieb als auch während längerer Stehzeiten des Analysators konstant bleibt. Aus der DE 35 02 546 C2 ist in diesem Zusammenhang ein Analysengerät zur Messung flüssiger oder gasförmiger Proben bekannt, bei welchem das Eingabeelement (z.B. eine Hohlnadel) der Probeneingabeeinrichtung in der Grundposition den Analysenweg gegen ein Andockelement abdichtet, welches mit Schlauchleitungen zur Zuleitung der Kalibrier- bzw. Standardmedien, sowie einem ventilgesteuerten Anschluss zur Zufuhr von Luft in Verbindung steht. In einer aus der Grundposition ausgeschwenkten Stellung des Eingabeelements können Probenflüssigkeiten aus unterschiedlichen Probenentnahmegefäßen zugeführt werden. Durch die Ermöglichung des Lufteintritts über ein Ventil zur Trennung der einzelnen Flüssigkeitsproben bzw. zur Trocknung des Probenweges sind keinerlei weitere Ventile oder sonstige Absperrorgane notwendig. Die Absperrventile der im Analysengerät angeordneten, separat austauschbaren Reagenzienbehälter sind als einfache Absperrventile ausgeführt. Eine ähnliche Ausführung eines Analysators offenbart die US 4,499,053 A.

Nachteilig ist, dass sowohl die Zuleitungen von den Reagenzienbehältern bis hin zu den Absperrventilen und weiters von den Absperrventilen bis hin zu den Anschlüssen in der Zuführleitung zum Andockelement nicht entleert werden können. Zumindest können diese Leitungsteile nicht entleert werden, ohne dass die in den Leitungen befindliche Flüssigkeit in die Reagenzienbehälter zurückläuft, wobei auch Luft in die Behälter gelangen kann und die Gaswerte der tonometrierten Kalibrierflüssigkeiten verstellt.

Anstelle der früher verwendeten "rigiden Reagenzienbehälter" werden nun flexible, verschweißte Beutel aus laminierter Folie (z.B. Aluminiumfolie) bevorzugt verwendet.

Der Einsatz von in austauschbaren Reagenzienkassetten befindlichen Reagenzienbeuteln in Blutgasmessgeräte wird in der Patentliteratur mehrfach beschrieben, beispielsweise in der US 5,882,602 A, der US 5,780,302 A und der US 6,872,297 B2.

Die US 5,882,602 A offenbart beispielsweise ein "self-sealing-valve", in Kombination mit einem "flow fitting". Dabei handelt es sich um ein Elastomerseptum im Anschlusselement des Reagenzienbeutels, das beim Einsetzen in den Analysator von einer Nadel durchstochen wird. Ähnliches gilt für einen Beutelanschluss, der in der US 5,780,302 A beschrieben wird.

Die Ausführungsvariante gemäß Fig. 1 der US 6,872,297 B2 zeigt eine austauschbare Reagenzienkassette (Disposable Cartridge), die mehrere Reagenzienbeuteln mit Kalibrier- und Waschflüssigkeiten (A, B, Rinse) aufweist, deren Anschlussleitungen über ein Drehventil und eine Sammelleitung der schwenkbaren Kanüle einer Eingabeeinheit zugeführt werden. Von dort gelangen die Flüssigkeiten dann über eine weitere Leitung in die Messkammer und schließlich über eine Peristaltikpumpe in den Abfallbehälter, welcher ebenfalls in der Reagenzienkassette angeordnet ist. Über das Drehventil kann in einer Drehstellung auch Luft in die Sammelleitung zugeführt werden.

Auch bei der in der US 6,872,297 A gezeigten Variante mit dem Drehventil können die von den Reagenzienbeuteln zum Drehventil führenden Anschlussleitungen nicht entleert werden, ohne eine Kontamination des Beutelinhalts mit Luft zu riskieren.

Es ist zwar bekannt, einfache Auf/Zu-Beutelventile während der Lagerzeit einer Reagenzienkassette geschlossen zu halten, und dann mit dem Einsetzvorgang einmalig und irreversibel zu öffnen, während der Einsatzdauer der Reagenzienkassette bleiben die Ventile jedoch geöffnet und ein nachgeschaltetes separates Drehventil übernimmt die Steuerung der Flüssigkeitsströme durch die Anschlussleitungen. Ein Leersaugen der Anschlussleitungen kann damit nicht bewerkstelligt werden. Das ist insbesondere bei längeren Stehzeiten nachteilig.

Die in der Reagenzienkassette befindlichen Kalibrier- bzw. Qualitätskontroll-Flüssigkeiten müssen im Messbetrieb des Analysators aus den jeweiligen Reagenzienbeuteln über ein Schlauchleitungssystem und eine Sammelleitung (siehe z.B. DE 35 02 546 C2) bzw. Drehventil (siehe z.B. US 6,872,297 A) kontaminationsfrei über eine Hohlnadel in die Messzelle transportiert werden.

Während der Stehzeiten, d.h. während der Messung der Probe und während des Standby-Betriebs (typischerweise zwischen 1 und 8 Stunden) kommt es aufgrund der Gaspermeabilität des Schlauchmaterials in den Zuleitungen (zur Sammelleitung bzw. zum Drehventil) zu signifikanten Änderungen der Gaskonzentrationen der Kalibrations- bzw. der Qualitätskontroll-Flüssigkeiten.

Aufgabe der Erfindung ist es, eine in einen Analysator einsetzbare Reagenzienkassette mit Reagenzienbeuteln der eingangs beschriebenen Art zu verbessern, so dass die Gaspermeabilität des Schlauchmaterials in den Anschlussleitungen oder das Zurückströmen von bereits entnommenen Funktionsflüssigkeiten keine nachteiligen Auswirkungen auf die Gaskonzentrationen der Kalibrations- bzw. der Qualitätskontroll-Flüssigkeiten verursacht. Der Betrieb des Analysators soll möglichst einfach, kostengünstig, robust und wartungsfrei zu bewerkstelligen sein.

Diese Aufgabe wird erfindungsgemäß dadurch gelöst, dass jeder Reagenzienbeutel direkt bei der Einmündung der jeweiligen Anschlussleitung ein vom Analysator ansteuerbares Mehrwegeventil mit zumindest zwei Ventilstellungen aufweist, wobei die erste Ventilstellung eine Fluidverbindung zwischen der Anschlussleitung und dem Reagenzienbeutel herstellt und die zweite Ventilstellung den Reagenzienbeutel verschließt und eine Fluidverbindung zwischen einer Belüftungsquelle, vorzugsweise der Umgebungsluft, und der Anschlussleitung herstellt. Mit der zweiten Ventilstellung wird ein Zurückfließen bereits entnommener Funktionsflüssigkeit aus der Anschlussleitung verhindert, wobei gleichzeitig die Anschlussleitungen durch das Einbringen von Luft (oder eines Inertgases) ab dem Beutelventil flüssigkeitsfrei und trocken gesaugt werden, ohne den Beutelinhalt mit Luft oder Inertgas zu kontaminieren.

In einer bevorzugten Ausführungsform der Erfindung münden die von den Mehrwegeventilen wegführenden Anschlussleitungen der Reagenzienbeutel direkt in eine der Eingabeeinrichtung des Analysators vorgeschaltete, gemeinsame Sammelleitung. Durch Verwendung einer Sammelleitung ("common rail") kann eine ventillose Anbindung zur Eingabeeinrichtung des Analysators hergestellt werden, welche in Kombination mit den in den einzelnen Reagenzienbeuteln integrierten Mehrwegventilen zu den weiter unten im Detail beschriebenen Vorteilen der Erfindung führt.

In einer alternativen Ausführungsform der Erfindung münden die von den Mehrwegeventilen wegführenden Anschlussleitungen direkt in ein der Eingabeeinrichtung vorgeschaltetes Sammelventil, vorzugsweise ein Drehventil.

Gemäß einer bevorzugten Variante der Erfindung weist jedes Mehrwegeventil eine dritte Ventilstellung auf, in welcher sowohl der Zugang zum Reagenzienbeutel als auch die Fluidverbindung zur Belüftungsquelle verschlossen ist. Dadurch ist gewährleistet, dass die Anschlussleitungen während der Lagerung oder des Transports der Reagenzienkassetten oder während langer Messpausen nicht durch Verunreinigungen aus der Umgebung kontaminiert werden.

Gemäß einer ersten Ausführungsvariante der Erfindung ist jedes Mehrwegeventil der Reagenzienbeutel als Kolbenventil ausgeführt, das einen ersten Anschluss aufweist, der in eine Randnaht des Reagenzienbeutels eingeschweißt oder eingeklebt ist, sowie einen zweiten Anschluss, der mit einer Anschlussleitung verbunden ist, wobei im Ventilgehäuse des Kolbenventils ein Ventilkolben axial verschieblich geführt ist, der zwischen einem ersten und einem zweiten Überströmbereich einen Dichtbereich aufweist, welche Bereiche durch eine Verschiebung des Ventilkolbens wahlweise mit dem zweiten Anschluss zur Deckung bringbar sind.

Jeder Ventilkolben weist dabei eine Eingriffsöffnung für den Eingriff eines analysatorseitig angeordneten Betätigungselementes auf, wobei die Betätigungselemente der einzelnen Beutelventile beim Einsetzen der Reagenzienkassette in den Analysator automatisch einrasten.

Ein erfindungsgemäßes Verfahren zum Betrieb eines Analysators, welcher eine Messkammer und eine austauschbare Reagenzienkassette aufweist, deren Reagenzienbeutel Funktionsflüssigkeiten, wie Kalibrier-, QC-, Spül-, Reinigungs- und Desinfektionsflüssigkeiten, enthalten, zeichnet sich durch zumindest folgende Schritte aus:
- zur Entnahme eines Flüssigkeitspaketes aus einem der Reagenzienbeutel wird ein direkt am Reagenzienbeutel angeordnetes Mehrwegeventil in eine erste Ventilstellung (SK) geschaltet, wodurch eine Fluidverbindung zum Inhalt des Reagenzienbeutels hergestellt wird,
- das Flüssigkeitspaket wird - beispielsweise mittels einer Schlauchpumpe - in Richtung der bzw. in die Messkammer transportiert,
- das Mehrwegeventil wird nach der Flüssigkeitsentnahme in eine zweite Ventilstellung (SL) geschaltet, wodurch die Verbindung zum Inhalt des Reagenzienbeutels gesperrt und gleichzeitig eine Fluidverbindung zu einer Belüftungsquelle, vorzugsweise Umgebungsluft, hergestellt wird,
- das gasförmige Medium wird aus der Belüftungsquelle, vorzugsweise bis zur Messkammer, nachgesaugt, sodass die Fluidverbindungen flüssigkeitsfrei und trocken sind.

Die Erfindung wird im Folgenden anhand von Ausführungsbeispielen näher erläutert. Es zeigen:
- Fig. 1: eine erfindungsgemäße Reagenzienkassette mit mehreren Reagen- zienbeuteln mit ventilgesteuerten Anschlussleitungen in einer sche- matischen Darstellung;
- Fig. 2: eine erste Detailvariante der erfindungsgemäßen Reagenzienkas- sette mit Kolbenventilen als Beutelventile und einer gemeinsamen Sammelleitung;
- Fig. 3: eine zweite Detailvariante der erfindungsgemäßen Reagenzienkas- sette mit Drehventilen als Beutelventile und einer gemeinsamen Sammelleitung;
- Fig. 4: eine dritte Detailvariante der erfindungsgemäßen Reagenzienkas- sette mit Drehventilen als Beutelventile und einem gemeinsamen Sammelventil;
- Fig. 5: einen erfindungsgemäßen Reagenzienbeutel mit einem in die Randnaht eingeschweißten Kolbenventil in einer Schnittdarstellung; sowie die
- Fig. 6: bis Fig. 8 unterschiedliche Ventilstellungen des Kolbenventils ge- mäß Fig. 5.

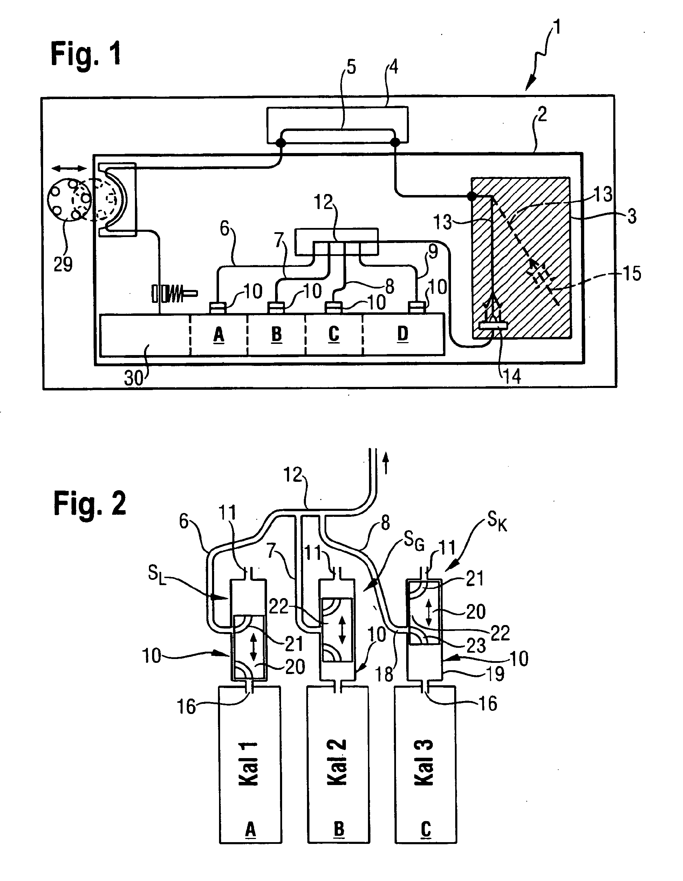

Der in Fig. 1 schematisch dargestellte Analysator 1 zur Analyse von medizinischen Probenflüssigkeiten, beispielsweise von Blutproben, weist eine Reagenzienkassette 2 auf, die austauschbar in den Analysator 1 einsetzbar ist. In der Kassette 2 sind mehrere Reagenzienbeutel A bis D angeordnet, welche Funktionsflüssigkeiten wie beispielsweise Kalibriermittel, Qualitätskontrollmittel, Spül-, Desinfektions- und Waschlösungen beinhalten, die wahlweise einer Eingabeeinrichtung 3 und in weiterer Folge einer z.B. in einer Sensorkassette 4 angeordneten Messkammer 5 zugeführt werden können. Die Eingabeeinrichtung 3 des Analysators 1 weist ein verschwenkbares Eingabeelement 13 (beispielsweise eine Hohlnadel) auf, das in einer Grundposition mit einem Andockelement 14 zur Zufuhr von Kalibier- und Waschmittel in Verbindung steht, wobei in einer aus der Grundposition ausgeschwenkten Stellung 15 Probenflüssigkeiten zugeführt werden können.

Die Probeneingabe kann aus unterschiedlichen Gefäßen (z.B. Spritze, Kapillare, Glasgefäß, etc.) bevorzugt über ein bewegliches, beispielsweise verschwenkbares Eingabeelement erfolgen, wie es beispielsweise in der DE 35 02 546 C2 und der US 4,499,053 A beschrieben ist.

Jeder Reagenzienbeutel A bis D weist direkt bei der Einmündung der jeweiligen Anschlussleitung 6, 7, 8, 9 ein vom Analysator ansteuerbares Mehrwegeventil 10 (Beutelventil) mit zumindest zwei Ventilstellungen auf, wobei die erste Ventilstellung eine Fluidverbindung zwischen der jeweiligen Anschlussleitung 6, 7, 8, 9 und dem zugehörigen Reagenzienbeutel A bis D herstellt. In der zweiten Ventilstellung wird der jeweilige Reagenzienbeutel A bis D verschlossen und eine Fluidverbindung 11 (siehe z.B. Fig. 2 bis Fig. 4) zwischen einer Belüftungsquelle, vorzugsweise der Umgebungsluft und der Anschlussleitung 6, 7, 8, 9 hergestellt. Alle von den Mehrwegeventilen 10 wegführenden Anschlussleitungen 6, 7, 8, 9 der Reagenzienbeutel A bis D münden direkt und ventillos in eine gemeinsame Sammelleitung 12 (Common Rail), welche eine Verbindung zum Andockelement 14 der Probeneingabeeinrichtung 3 herstellt. Die Sammelleitung 12 bzw. der Sammelteil kann als Spritzgussteil ausgeführt sein. Die Anschlussleitungen 6 bis 9 von den Beutelventilen 10 sind beispielsweise aus flexiblen Kunststoffschläuchen ausgeführt.

Die Probeneingabeeinrichtung 3 mit dem verschwenkbaren Eingabeelement 13 ist bevorzugt ein integraler Bestandteil der Reagenzienkassette 2 und wird mit dieser ausgetauscht.

Die Fluidleitung führt nach der Sensorkassette 4 über den feststehenden Teil einer im Analysator 1 integrierten Schlauchpumpe 29 und mündet in einen in der Reagenzienkassette 2 angeordneten Abfallbeutel 30. Die Sensorkassette 4 befindet sich in der dargestellten Ausführungsform nicht in der Reagenzienkassette 2 und kann unabhängig von dieser ausgetauscht werden.

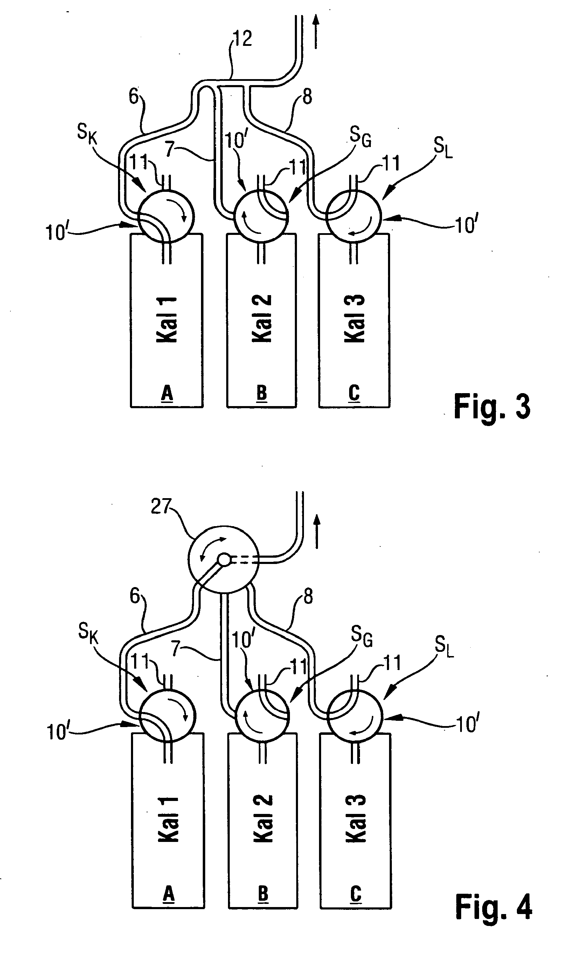

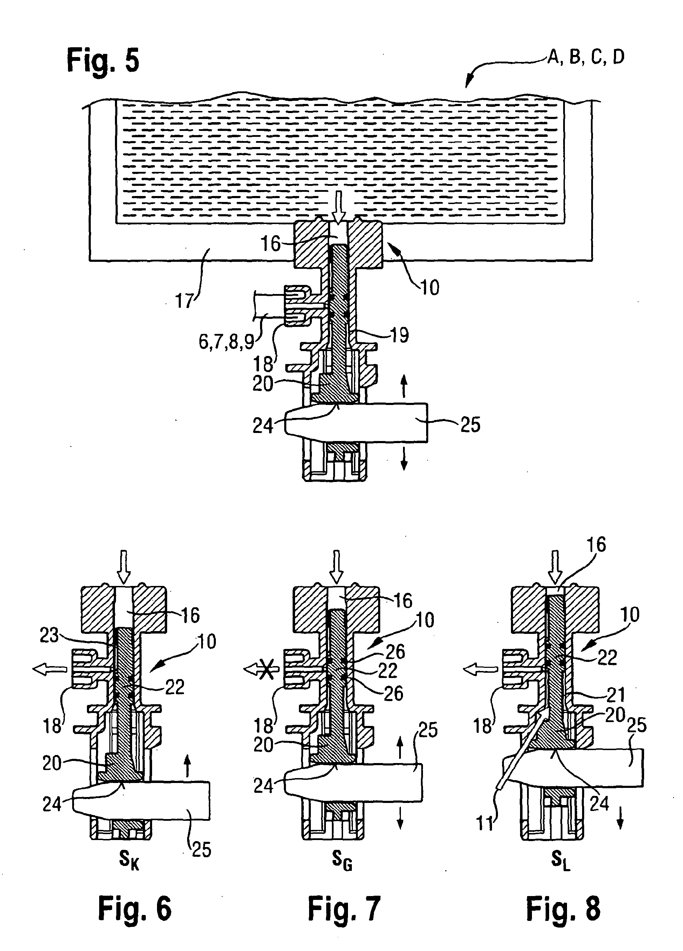

In der Ausführungsvariante gemäß Fig. 2 ist jedes Mehrwegeventil 10 (Beutelventil) jeweils als Kolbenventil ausgeführt, das einen ersten Anschluss 16 aufweist, der in eine Randnaht 17 (siehe Fig. 4) des Reagenzienbeutels A, B und C eingeschweißt oder eingeklebt ist. Weiters weist jedes Kolbenventil 10 einen Schlauchanschluss 18 auf, der mit einer Anschlussleitung 6, 7, 8 verbunden ist. Im Ventilgehäuse 19 der Kolbenventile ist ein Ventilkolben 20 axial verschieblich geführt, der zwischen einem ersten 21 und einem zweiten Überströmbereich 23 einen Dichtbereich 22 aufweist, welche Bereiche 21, 22, 23 durch eine Verschiebung des Ventilkolbens 20 wahlweise mit dem Schlauchanschluss 18 zur Deckung gebracht werden können. In der ersten Ventilstellung SK kann das Reagenzmittel aus dem Beutel C über den Überströmbereich 23 angesaugt werden. In der zweiten Ventilstellung SL ist der Beutel A verschlossen, wobei über die Überströmöffnung 21 im Kolben 20 und die Fluidverbindung 11 Luft angesaugt werden kann. In der Stellung SG sind sowohl der Beutelanschluss 16 als auch die Fluidverbindung 11 durch den Dichtbereich 22 verschlossen. Die einzelnen Ventilstellungen sind anhand einer konkreten Ausführungsvariante im Detail in den Fig. 6 bis Fig. 8 dargestellt.

Die Ausführung gemäß Fig. 3 zeigt eine Variante der Erfindung, bei welcher die Mehrwegeventile jeweils als Drehventile 10' ausgeführt sind, welche in einer ersten Drehstellung SK eine Fluidverbindung zwischen den Anschlussleitungen 6, 7, 8 und den Reagenzienbeuteln A, B, C und in einer zweiten Drehstellung SL eine Fluidverbindung 11 zwischen einer Belüftungsquelle, vorzugsweise der Umgebungsluft, und den Anschlussleitungen 6, 7, 8 herstellen. Auch hier münden die Anschlussleitungen 6, 7, 8 direkt und ventillos in die Sammelleitung 12 (Common Rail) und können zur Gänze flüssigkeitsfrei und trocken gesaugt werden, ohne den Beutelinhalt zu kontaminieren. In der Stellung SG sind sowohl der Beutelanschluss 16 als auch die Fluidverbindung 11 durch das Drehventil 10' verschlossen.

In der Ausführungsvariante gemäß Fig. 4 münden die von den Mehrwegeventilen 10' wegführenden Anschlussleitungen 6, 7, 8 der Reagenzienbeutel A, B, C direkt in ein der Eingabeeinrichtung vorgeschaltetes Sammelventil 27, vorzugsweise ein Drehventil. Auch bei dieser Variante können alle Fluidverbindungen zur Gänze flüssigkeitsfrei und trocken gesaugt werden, ohne den Beutelinhalt zu kontaminieren.

In der Praxis wird - wie in Fig. 5 dargestellt - die Systemankopplung der Reagenzienbeutel A bis D an den Beutelanschluss (erster Anschluss) 16 bevorzugt als Butterfly-Anschluss realisiert und darin ein Kolbenventil 10 eingebaut. Die Butterflys (auch Schiffchen genannt) können bevorzugt in eine Rand- bzw. Seitennaht 17 der Beutel eingeschweißt oder eingeklebt werden.

Ein erfindungsgemäßer Reagenzienbeutel A, B, C, D mit einem bei der Einmündung einer Anschlussleitung 6, 7, 8, 9 angeordnetem Ventil 10, welches eine erste Ventilstellung (Offenstellung) und eine zweite Ventilstellung (GeschlossenStellung) aufweist, zeichnet sich somit dadurch aus, dass in der GeschlossenStellung eine Fluidverbindung 11 zwischen einer Belüftungsquelle, vorzugsweise der Umgebungsluft, und der Anschlussleitung 6, 7, 8, 9 hergestellt ist (siehe Fig. 8). Der Ventilkolben 20 weist eine Eingriffsöffnung 24 für den Eingriff eines analysatorseitig angeordneten Betätigungselementes 25 auf, welches zum Umschalten in die einzelnen Ventilstellungen - wie mit Pfeilen angedeutet - auf und ab bewegt wird.

Die drei verschiedenen Ventilstellungen werden beispielhaft anhand des Kolbenventils 10 (siehe Fig. 6 bis Fig. 8) dargestellt:
Fig. 6, Ventilstellung SK: Funktionsflüssigkeit wird aus dem Beutel über den ersten Anschluss 16 (Beutelanschluss), den Überströmbereich 23 (z.B. eine Nut oder eine Flachstelle im Ventilkolben 20) und den zweiten Anschluss 18 (Rohranschluss) angesaugt;
Fig. 7, Ventilstellung SG: Das Beutelventil ist geschlossen (Sperrstellung);
Fig. 8, Ventilstellung SL: Durch den Überströmbereich 21 (z.B. ein Ringspalt) und/oder einen Kanal im Ventilgehäuse wird Umgebungsluft angesaugt, wobei der Beutelanschluss 16 gesperrt ist.

Der Dichtbereich 22 des Ventilkolbens 20 kann von den beiden angrenzenden Überströmbereichen 21, 23 jeweils durch eine O-Ringdichtung 26 abgegrenzt sein.

Beim Einsetzen einer neuen Reagenzienkassette 2 in den Analysator1 bzw. im Lieferzustand sind sämtliche Beutelventile 10 in Stellung SG (siehe Fig. 7). Die Anschlussleitungen 6 bis 9 sind flüssigkeitsfrei.

Es folgen beispielhafte Anwendungen unter Verwendung der erfindungsgemäßen Reagenzienkassette:

### Beispiel 1: Generieren eines Flüssigkeitspaketes aus dem Reagenzienbeutel A zur Vermessung in der Messkammer.

Bei dem in der Tabelle 1 dargestellten Ablauf wird von einem Grundzustand (Schritt 1) ausgegangen, bei welchem die Fluidverbindungen vom jeweiligen Beutelventil 10 bis zur Messkammer 5 mit Luft gefüllt sind. Alle Beutelventile 10 befinden sich in Stellung SG, die Schlauchpumpe 29 ist deaktiviert und die Eingabeeinheit 13 befindet sich im Andockelement 14 (pos.W).

**Tabelle 1**

| Schritt | Ventilstellung bei Beutel A | Ventilstellung bei Beutel B-D | Stellung Eingabeeinheit 13 | Aktion |
|---|---|---|---|---|
| 1 | SG | SG | posW | Standby |
| 2 | SG->SK | SG | posW | Ventil bei A in Stellung SK |
| 3 | SK | SG | posW | Mittels Pumpe wird Flüssigkeit aus dem Beutel A über Sammelleitung 12 und Andockelement 14 zur und in bzw. durch die Messkammer 5 gesaugt. |
| 4 | SK->SL | SG | posW | Ventil bei A in Stellung SL |
| 5 | SL | SG | posW | Mittels Pumpe wird Luft an der Ventilöffnung 11 nachgesaugt bis das Rohrsystem bis zum Eingang der Messkammer 5 mit Luft gefüllt ist. |
| 6 | SL | SG | posW | Pumpe zum Flüssigkeitstransport wird gestoppt und die Flüssigkeit kann in der Messkammer 5 vermessen werden. |
| 7 | SL->SG | SG | posW | Ventil bei A in Stellung SG |
| 8 | SG | SG | posW | Weiter mit Schritt 1 |

Die Paketgröße, d.h. die Menge bzw. das Volumen der Flüssigkeit aus dem Reagenzienbeutel A, kann zeitgesteuert oder mittels Ansprechen von Überwachungssensoren bei Flüssigkeitskontakt, welche in der Strecke zur Messkammer 5 positioniert sind, festgelegt werden.

Zur Initialisierung (Inbetriebnahme) der erläuterten Anwendung sind optional hier nicht näher ausgeführte, dem Schritt 1 vorgelagerte Schritte vorgesehen. Zur Beendigung der erläuterten Anwendung gibt es optional hier nicht näher ausgeführte, den Schritten 1 bis 8 nachgelagerte Schritte.

### Beispiel 2: Waschen und Vorbereitung zum Positionieren einer Probe in der Messkammer

In einer bevorzugten Ausführungsform wird das Mehrwegeventil zumindest eines Reagenzienbeutels, welcher vorzugsweise eine Reinigungs-, Desinfektions- oder Spülflüssigkeit enthält, alternierend von der ersten Ventilstellung (SK) zum Ansaugen von Flüssigkeit in die zweite Ventilstellung (SL) zum Ansaugen eines gasförmigen Mediums, vorzugsweise Umgebungsluft, umgeschaltet, sodass abwechselnd Flüssigkeits- und Gastrennpakete gebildet werden und durch das Leitungssystem des Analysators bis in die Messkammer transportiert werden. Es hat sich gezeigt, dass das Waschen insbesondere der Messkammer durch alternierendes Spülen mit Flüssigkeits- und Luftrennpaketen besonders vorteilhaft ist.

Bei dem in Tabelle 2 dargestellten Ablauf wird von einem Grundzustand (Schritt 1) ausgegangen, bei welchem die Fluidverbindungen vom jeweiligen Beutelventil 10 bis zur Messkammer 5 mit Luft gefüllt sind. Alle Beutelventile 10 befinden sich in Stellung SG, die Pumpe 29 ist deaktiviert und die Eingabeeinheit 13 befindet sich im Andockelement 14 (pos.W ).

**Tabelle 2**

| Schritt | Ventilstellung bei Beutel A | Ventilstellung bei Beutel B | Ventilstellung bei Beutel C-D | Aktion |
|---|---|---|---|---|
| 1 | SG | SG | SG | Standby |
| 2 | SG→SK | SG | SG | Ventil bei A in Stellung SK |
| 3 | SK | SG | SG | Mittels Pumpe wird Flüssigkeit aus dem Beutel A über Sammelleitung 12 und Andockelement 14 zur Messkammer 5 gesaugt |
| 4 | SK→SG | SG→SL | SG | Während die Pumpe weiter ansaugt, werden die Ventile bei A und B synchron betätigt. Die Förderung von Flüssigkeit aus dem Beutel A wird unterbrochen und am Ventil bei B Luft angesaugt. Damit wird an der Sammelleitung 12 ein Luft-Trennpacket generiert. |
| 5 | SG→SK | SL→SG | SG | Während die Pumpe weiter ansaugt, werden die Ventile bei A und B synchron betätigt. Das Ansaugen von Luft am Ventil bei B wird abgebrochen, während gleichzeitig das Ansaugen von Flüssigkeit aus A wieder freigegeben wird. |
| 6 | SK | SG | SG | Falls weitere Luft-Trennpackete generiert werden sollen, Sprung zu Schritt 4, sonst weiter mit Schritt 7 |
| 7 | SK→SL | SG | SG | Mittels Pumpe wird Luft an der Fluidverbindung 11 nachgesaugt so dass das Rohrsystem bis zum Eingang der Messkammer 5 mit Luft gefüllt ist. |
| 8 | SL→SG | SG | SG | Die Pumpe wird deaktiviert und die Beutelventile 10 in ihre Grundstellung gefahren. |
| 9 | SG | SG | SG | Weiter mit Schritt 1 |

Durch Wiederholung der Schritte 4-5 können beliebig viele Flüssigkeits- und Gastrennpakete (z.B. Lufttrennpakete), welche zum Waschen benötigt werden, generiert werden.

### Beispiel 3: Anschlussleitungen 6 bis 9 der Reagenzienbeutel A bis D teilweise mit Flüssigkeit füllen

Es hat sich bei der Ausführungsvariante mit einer gemeinsamen Sammelleitung 12 (siehe Fig. 1 bis Fig. 3) gezeigt, dass beim Saugen einer Flüssigkeit, insbesondere einer Kalibrierflüssigkeit mit darin gelösten Gasen, durch beispielsweise eine Anschlussleitung 6 und die Sammelleitung 12, das in den anderen Anschlussleitungen 7, 8, 9 vorliegende Gas in Kontakt mit der vorbeifließenden Flüssigkeit kommt und dadurch die Konzentrationen der in der Flüssigkeit gelösten Gase verändern kann. Dies ist z.B. bei Kalibrierflüssigkeiten für Gassensoren nachteilig.

In einer bevorzugten Ausführungsform wird während des Transports von Flüssigkeits- und Gastrennpaketen der Druck in den gasführenden Anschlussleitungen der Reagenzienbeutel, vorzugsweise durch eine kurzzeitige Erhöhung der Drehzahl einer für den Flüssigkeitstransport im Analysator vorgesehenen Schlauchpumpe, zunächst abgesenkt und anschließend wieder erhöht, vorzugsweise durch Erniedrigung der Drehzahl der Schlauchpumpe 29 auf Normalbetrieb, so dass Flüssigkeit in Teile der Anschlussleitungen 6, 7, 8, 9 eingebracht wird, die in eine gemeinsame Sammelleitung 12 münden.

Es wurde daher ein Ablauf etabliert, bei dem die Anschlussleitungen 7 bis 9 an der Verbindungsstelle zur Sammelleitung 12 teilweise mit Flüssigkeit befüllt werden. Grundlage dafür ist die kurzzeitige Erhöhung der Sauggeschwindigkeit der Pumpe 29 und die damit verbundenen Unterdrücke in den Anschlussleitungen 7 bis 9. Wird die Sauggeschwindigkeit der Pumpe 29 wieder auf die normale Rate abgesenkt, kommt es zu Kontraktion der Gasvolumina in den Anschlussleitungen 7 bis 9, wobei diese teilweise mit Flüssigkeit aus der Sammelleitung 12 befüllt werden.

Bei dem in Tabelle 3 dargestellten Ablauf wird wieder von einem Grundzustand (Schritt 1) ausgegangen, der bereits im Beispiel 1 beschrieben ist.

**Tabelle 3**

| Schritt | Ventilstellung bei Beutel A | Ventilstellung bei Beutel B | Ventilstellung bei Beutel C-D | Aktion |
|---|---|---|---|---|
| 1 | SG | SG | SG | Standby |
| 2 | SG→SK | SG | SG | Ventil bei A in Stellung SK |
| 3 | SK | SG | SG | Mittels Pumpe 29 wird Flüssigkeit aus dem Beutel A über Anschlussleitung 6, Sammelleitung 12 und Andockelement 14 zur Messkammer 5 gesaugt |
| 4 | SK | SG | SG | Die Sauggeschwindigkeit der Pumpe 29 wird kurzzeitig gesteigert, so dass es zu einer erhöhten Saugrate von Flüssigkeit A kommt. Gleichzeitig kommt es zu einer Unterdruckbildung im gesamten Leitungssystem, so dass sich die Gasvolumina in den Anschlussleitungen 7 bis 9 ausdehnen. Das führt zu einem geringfügigen Übertritt von Gas aus den Anschlussleitungen 7 bis 9 in die Sammelleitung 12 |
| 5 | SK | SG | SG | Absenken der Saugrate auf die normale Rate. Aufgrund des damit verbundenen Abbaues des Unterdrucks im gesamten Leitungssystem kommt es zu Kontraktion der Gasvolumina in den Anschlussleitungen 7 bis 9. Das führt dazu, dass die Anschlussleitungen 7 bis 9 über die Sammelleitung 12 teilweise mit Flüssigkeit A gefüllt werden. |
| 6 | SK | SG | SG | Fortsetzung des Saugprozesses der Flüssigkeit A bis zur vollständigen Füllung der Messkammer 5 |
| 7 | SK | SG | SG | Stillstand der Pumpe 29 und Vermessung von Flüssigkeit A in der Messkammer |
| 8 | SK→SL | SG | SG | Entleerung der Anschlussleitung 6 des Beutels A durch Sammelleitung 12 und Messkammer 5 mittels Pumpe 29 |
| 9 | SL→SG | SG→SL | SG | Entleerung der Anschlussleitung 7 des Beutels B durch Sammelleitung 12 und Messkammer 5 mittels Pumpe 29 |
| 10-n | SG | SL→SG | SG→SL | Entleerung der Anschlussleitungen 8, 9, der Beutel C, D,... durch Sammelleitung 12 und Messkammer 5 mittels Pumpe 29 |
| 11 | SG | SG | SL→SG | Alle Ventile schliessen |
| 12 | SG | SG | SG | Standby |

### Beispiel 4: Einsatz eines Sammelventils (Mehrwegventils) anstelle einer Sammelleitung

Der in Tabelle 4 dargestellte Ablauf zeigt beispielhaft, dass anstelle der Sammelleitung 12 auch ein Sammelventil, z.B. ein Drehventil 27 eingesetzt werden kann. Das Drehventil 27 besitzt beispielsweise die Stellungen 27-6, 27-7, und 27-8 (womit jeweils die Verbindung zu den Anschlussleitungen 6, 7 und 8 gemäß Fig. 4. angedeutet wird).

In diesem Fall kann auf die Sperrstellung SG der Beutelventile verzichtet werden, d.h. man kommt mit zwei Ventilstellungen bei den Beutelventilen aus.

**Tabelle 4**

| Schritt | Ventilstellung bei Beutel A | Ventilstellung bei Beutel B | Ventilstellung Sammelventil 27 | Aktion |
|---|---|---|---|---|
| 1 | SL | SL | 27-6 | Standby |
| 2 | SL->SK | SL | 27-6 | Ventil bei A in Stellung SK |
| 3 | SK | SL | 27-6 | Mittels Pumpe wird Flüssigkeit aus dem Beutel A über Sammelventil 27 und Andockelement 14 zur und durch die Messkammer 5 gesaugt. |
| 4 | SK->SL | SL | 27-6 | Ventil bei A in Stellung SL |
| 5 | SL | SL | 27-6 | Mittels Pumpe wird Luft an der Ventilöffnung 11 nachgesaugt so dass das Rohrsystem bis zum Eingang der Messkammer 5 mit Luft gefüllt ist. |
| 6 | SL | SL | 27-6 | Pumpe zum Flüssigkeitstransport wird gestoppt und die Flüssigkeit kann in der Messkammer 5 vermessen werden. |
| 7 | SL | SL | 27-6 | Weiter mit Schritt 1 |

## Patentansprüche

1. Reagenzienkassette (2), welche austauschbar in einen Analysator (1) einsetzbar ist und mehrere Reagenzienbeutel (A, B, C, D) aufweist, wobei die Reagenzienbeutel (A, B, C, D) mit Anschlussleitungen (6, 7, 8, 9) ausgestattet sind, die wahlweise einer Eingabeeinrichtung (3) des Analysators zuschaltbar sind, **dadurch gekennzeichnet, dass** jeder Reagenzienbeutel (A, B, C, D) direkt bei der Einmündung der jeweiligen Anschlussleitung (6, 7, 8, 9) ein vom Analysator (1) ansteuerbares Mehrwegeventil (10, 10') mit zumindest zwei Ventilstellungen aufweist, wobei die erste Ventilstellung eine Fluidverbindung zwischen der Anschlussleitung (6, 7, 8, 9) und dem Reagenzienbeutel (A, B, C, D) herstellt und die zweite Ventilstellung den Reagenzienbeutel (A, B, C, D) verschließt und eine Fluidverbindung (11) zwischen einer Belüftungsquelle, vorzugsweise der Umgebungsluft, und der Anschlussleitung (6, 7, 8, 9) herstellt.

2. Reagenzienkassette (2) nach Anspruch 1, **dadurch gekennzeichnet, dass** die von den Mehrwegeventilen (10, 10') wegführenden Anschlussleitungen (6, 7, 8, 9) der Reagenzienbeutel (A, B, C, D) direkt in eine der Eingabeeinrichtung (3) vorgeschaltete Sammelleitung (12) münden.

3. Reagenzienkassette (2) nach Anspruch 1, **dadurch gekennzeichnet, dass** die von den Mehrwegeventilen (10, 10') wegführenden Anschlussleitungen (6, 7, 8, 9) der Reagenzienbeutel (A, B, C, D) direkt in ein der Eingabeeinrichtung (3) vorgeschaltetes Sammelventil (27), vorzugsweise ein Drehventil, münden.

4. Reagenzienkassette (2) nach einem der Ansprüche 1 bis 3, **dadurch gekennzeichnet, dass** jedes Mehrwegeventil (10, 10') der Reagenzienbeutel (A, B, C, D) eine dritte Ventilstellung aufweist, in welcher sowohl der Zugang zum Reagenzienbeutel (A, B, C, D) als auch die Fluidverbindung (11) zur Belüftungsquelle verschlossen ist.

5. Reagenzienkassette (2) nach einem der Ansprüche 1 bis 4, **dadurch gekennzeichnet, dass** jedes Mehrwegeventil der Reagenzienbeutel (A, B, C, D) als Kolbenventil (10) ausgeführt ist, das einen ersten Anschluss (16) aufweist, der in eine Randnaht (17) des Reagenzienbeutels (A, B, C, D) eingeschweißt oder eingeklebt ist, sowie einen zweiten Anschluss (18), der mit einer Anschlussleitung (6, 7, 8, 9) verbunden ist, dass im Ventilgehäuse (19) des Kolbenventils (10) ein Ventilkolben (20) axial verschieblich geführt ist, der zwischen einem ersten (21) und einem zweiten Überströmbereich (23) einen Dichtbereich (22) aufweist, welche Bereiche (21, 22, 23) durch eine Verschiebung des Ventilkolbens (20) wahlweise mit dem zweiten Anschluss (18) zur Deckung bringbar sind.

6. Reagenzienkassette (2) nach einem der Ansprüche 1 bis 4, **dadurch gekennzeichnet, dass** jedes Mehrwegeventil der Reagenzienbeutel (A, B, C, D) als Drehventil (10') ausgeführt ist, welches in einer ersten Drehstellung eine Fluidverbindung zwischen der Anschlussleitung (6, 7, 8, 9) und dem Reagenzienbeutel (A, B, C, D) und in einer zweiten Drehstellung eine Fluidverbindung (11) zwischen einer Belüftungsquelle, vorzugsweise der Umgebungsluft, und der Anschlussleitung (6, 7, 8, 9) herstellt.

7. Reagenzienbeutel (A, B, C, D) mit einem bei der Einmündung einer Anschlussleitung (6, 7, 8, 9) angeordnetem Ventil (10), welches eine erste Ventilstellung (Offenstellung) und eine zweite Ventilstellung (GeschlossenStellung) aufweist, **dadurch gekennzeichnet, dass** in der GeschlossenStellung eine Fluidverbindung (11) zwischen einer Belüftungsquelle, vorzugsweise der Umgebungsluft, und der Anschlussleitung (6, 7, 8, 9) hergestellt ist.

8. Reagenzienbeutel (A, B, C, D) nach Anspruch 7, **dadurch gekennzeichnet, dass** das Ventil (10) eine dritte Ventilstellung aufweist, in welcher sowohl der Reagenzienbeutel (A, B, C, D) als auch die Fluidverbindung (11) zur Belüftungsquelle verschlossen sind.

9. Verfahren zum Betrieb eines Analysators (1), welcher eine Messkammer (5) und eine austauschbare Reagenzienkassette (2) aufweist, deren Reagenzienbeutel (A, B, C, D) Funktionsflüssigkeiten, wie Kalibrier-, QC-, Spül-, Reinigungs- und Desinfektionsflüssigkeiten, enthalten, **dadurch gekennzeichnet, dass** zur Entnahme eines Flüssigkeitspaketes aus einem der Reagenzienbeutel (A, B, C, D) ein direkt am Reagenzienbeutel angeordnetes Mehrwegeventil (10, 10') in eine erste Ventilstellung (SK) geschaltet wird, wodurch eine Fluidverbindung zum Inhalt des Reagenzienbeutels (A) hergestellt wird, dass das Flüssigkeitspaket in Richtung der Messkammer (5) transportiert wird, dass das Mehrwegeventil (10, 10') nach der Flüssigkeitsentnahme in eine zweite Ventilstellung (SL) geschaltet wird, wodurch die Verbindung zum Inhalt des Reagenzienbeutels (A) gesperrt und eine Fluidverbindung zu einer Belüftungsquelle, vorzugsweise Umgebungsluft, hergestellt wird, sowie dass das gasförmige Medium aus der Belüftungsquelle, vorzugsweise bis zur Messkammer (5), nachgesaugt wird.

10. Verfahren nach Anspruch 9, **dadurch gekennzeichnet, dass** das Mehrwegeventil (10, 10') zumindest eines Reagenzienbeutels (A, B, C, D), welcher vorzugsweise eine Reinigungs-, Desinfektions- oder Spülflüssigkeit enthält, alternierend von der ersten Ventilstellung (SK) zum Ansaugen von Flüssigkeit in die zweite Ventilstellung (SL) zum Ansaugen eines gasförmigen Mediums, vorzugsweise Umgebungsluft, umgeschaltet wird, sodass abwechselnd Flüssigkeits- und Gastrennpakete gebildet werden und durch das Leitungssystem des Analysators bis in die Messkammer (5) transportiert werden.

11. Verfahren nach Anspruch 9 oder 10, **dadurch gekennzeichnet, dass** während des Transports von Flüssigkeits- und Gastrennpaketen der Druck in den gasführenden Anschlussleitungen (6, 7, 8, 9) der Reagenzienbeutel (A, B, C, D), vorzugsweise durch eine kurzzeitige Erhöhung der Drehzahl einer für den Flüssigkeitstransport im Analysator vorgesehenen Schlauchpumpe (29), zunächst abgesenkt wird und anschließend wieder erhöht wird, vorzugsweise durch Erniedrigung der Drehzahl der Schlauchpumpe (29) auf Normalbetrieb, so dass Flüssigkeit in Teile der Anschlussleitungen (6, 7, 8, 9) eingebracht wird, die in eine gemeinsame Sammelleitung (12) münden.

## Claims

1. Reagent cartridge (2), which can be exchangeably inserted into an analyzer (1) and comprises a plurality of reagent bags (A ,B, C, D), said reagent bags (A, B, C, D) being furnished with connecting lines (6, 7, 8, 9), each of which may optionally be connected to an input device (3) of the analyzer, **characterised in that** each reagent bag (A, B, C, D) has an analyzer-controlled multi-way valve (10, 10') with at least two valve positions at the point where the respective connecting line (6, 7, 8, 9) departs, such that the first valve position opens a fluid path between the connecting line (6, 7, 8, 9) and the reagent bag (A, B, C, D), while the second valve position closes off the reagent bag (A, B, C, D) and opens a fluid path (11) between a ventilation source, preferably ambient air, and the connecting line (6, 7, 8, 9).

2. Reagent cartridge (2) according to claim 1, **characterised in that** the connecting lines (6, 7, 8, 9) of the reagent bags (A, B, C, D) departing from the multi-way valves (10, 10') open directly into a common rail (12) preceding the input device (3).

3. Reagent cartridge (2) according to claim 1, **characterised in that** the connecting lines (6, 7, 8, 9) of the reagent bags (A, B, C, D) departing from the multi-way valves (10, 10') open directly into a collector valve (27), preferably a rotary valve, preceding the input device (3).

4. Reagent cartridge (2) according to any of claims 1 to 3, **characterised in that** each multi-way valve (10, 10') of the reagent bags (A, B, C, D) has a third valve position, in which access to the reagent bags (A, B, C, D) as well as the fluid path (11) to the ventilation source is closed.

5. Reagent cartridge (2) according to any of claims 1 to 4, **characterised in that** each multi-way valve of the reagent bags (A, B, C, D) is configured as a piston valve (10), which has a first fitting (16) glued or heat-sealed into a peripheral seam (17) of the reagent bag (A, B, C, D) and a second fitting (18) joined to a connecting line (6, 7, 8, 9), and wherein a valve piston (20) slides axially in the valve cylinder (19) of the piston valve (10), said piston (20) having a sealing region (22) between a first (21) and a second transfer passage (23), where by shifting the valve piston (20) each passage or region (21, 22, 23) can individually be aligned with the second fitting (18).

6. Reagent cartridge (2) according to any of claims 1 to 4, **characterised in that** each multi-way valve of the reagent bags (A, B, C, D) is configured as a rotary valve (10'), which in a first rotary position establishes a fluid path between the connecting line (6, 7, 8, 9) and the reagent bag (A, B, C, D), and in a second rotary position establishes a fluid path (11) between a ventilation source, preferably ambient air, and the connecting line (6, 7, 8, 9).

7. Reagent bag (A, B, C, D) with a valve (10) placed at the beginning of a connecting line (6, 7, 8, 9), which has a first valve position (open position) and a second valve position (closed position), **characterised in that** a fluid path (11) is established in the closed position between a ventilation source, preferably ambient air, and the connecting line (6, 7, 8, 9).

8. Reagent bag (A, B, C, D) according to claim 7, **characterised in that** the valve (10) has a third valve position, in which both the reagent bag (A, B, C, D) and the fluid path (11) towards the ventilation source are closed.

9. Method for operating an analyzer (1), which comprises a measuring chamber (5) and an exchangeable reagent cartridge (2), with reagent bags (A, B, C, D) containing functional fluids, such as calibrating, quality control, rinsing, flushing and disinfectant fluids, **characterised in that** for drawing a fluid packet from one of the reagent bags (A, B, C, D) a multi-way valve (10, 10') located directly at the reagent bag is switched to a first valve position (SK), such that a fluid path to the contents of the reagent bag (A) is established, and wherein the fluid packet is transported towards the measuring chamber (5), and wherein the multi-way valve (10, 10') is switched to a second valve position (SL) after drawing the fluid packet, such that the path to the contents of the reagent bag (A) is closed and a fluid path to a ventilation source, preferably ambient air, is established, and further wherein the gaseous medium from the ventilation source is sucked in, preferably up to the measuring chamber (5).

10. Method according to claim 9, **characterised in that** the multi-way valve (10, 10') of at least one reagent bag (A, B, C, D), preferably containing a rinsing, flushing or disinfectant fluid, is alternatingly switched from a first valve position (SK) for sucking in fluid to a second valve position (SL) for sucking in a gaseous medium, preferably ambient air, such that fluid packets and separating gas packets are formed alternatingly and transported through the tubing system of the analyzer into the measuring chamber (5).

11. Method according to claim 9 or 10, **characterised in that** during transport of fluid and separating gas packets pressure in the gas-containing connecting lines (6, 7, 8, 9) of the reagent bags (A, B, C, D) is first lowered, preferably by a short-term increase of revolution rate of a hose pump (29) provided in the analyzer for fluid transport, and subsequently is again increased, preferably by reducing the revolution rate of the hose pump (29) to normal, thus introducing fluid into parts of the connecting lines (6, 7, 8, 9) which open into a common rail (12).

## Revendications

1. Cassette de réactifs (2) qui peut être introduite de façon à pouvoir être échangée dans un analyseur (1) et qui présente plusieurs sacs de réactifs (A, B, C, D), les sacs de réactifs (A, B, C, D) étant munis de conduits de raccordement (6, 7, 8, 9) qui peuvent être raccordés de manière sélective à un dispositif d'entrée (3) de l'analyseur, **caractérisée en ce que** chaque sac de réactif (A, B, C, D) présente, directement à l'embouchure du conduit de raccordement respectif (6, 7, 8, 9), une soupape multivoie (10, 10') qui peut être actionnée par l'analyseur (1), comprenant au moins deux positions de soupape, la première position de soupape établissant une liaison par fluide entre le conduit de raccordement (6, 7, 8, 9) et le sac de réactif (A, B, C, D), et la deuxième position de soupape fermant le sac de réactif (A, B, C, D) et établissant une liaison par fluide (11) entre une source d'aération, de préférence de l'air de l'environnement, et le conduit de raccordement (6, 7, 8, 9).

2. Cassette de réactifs (2) selon la revendication 1, **caractérisée en ce que** les conduits de raccordement (6, 7, 8, 9) des sacs de réactifs (A, B, C, D) s'éloignant des soupapes multivoies (10, 10') débouchent directement dans un conduit de récupération (12) monté en amont du dispositif d'entrée (3).

3. Cassette de réactifs (2) selon la revendication 1, **caractérisée en ce que** les conduits de raccordement (6, 7, 8, 9) des sacs de réactifs (A, B, C, D) s'éloignant des soupapes multivoies (10, 10') débouchent directement dans une soupape d'accumulation (27), de préférence, une soupape rotative montée en amont du dispositif d'entrée (3).

4. Cassette de réactifs (2) selon l'une quelconque des revendications 1 à 3, **caractérisée en ce que** chaque soupape multivoie (10, 10') des sacs de réactifs (A, B, C, D) présente une troisième position de soupape, dans laquelle, aussi bien l'accès au sac de réactif (A, B, C, D) que la liaison par fluide (11) à la source d'aération sont fermés.

5. Cassette de réactifs (2) selon l'une quelconque des revendications 1 à 4, **caractérisée en ce que** chaque soupape multivoie (10, 10') des sacs de réactifs (A, B, C, D) est réalisée sous la forme d'une soupape à piston (10), qui présente un premier raccord (16) qui est inséré par soudure ou par collage dans un cordon marginal (17) du sac de réactif (A, B, C, D), ainsi qu'un deuxième raccord (18) qui est relié à un conduit de raccordement (6, 7, 8, 9), **en ce qu'**un piston de soupape (20) est guidé en coulissement axial dans le logement de soupape (19) de la soupape à piston (10), le piston en question présentant une zone d'étanchéité (22) entre une première zone de trop-plein (21) et une deuxième zone de trop-plein (23), lesdites zones (21, 22, 23) pouvant être amenées, via un coulissement du piston de soupape (20), de manière sélective en alignement avec le deuxième raccord (18).

6. Cassette de réactifs (2) selon l'une quelconque des revendications 1 à 4, **caractérisée en ce que** chaque soupape multivoie (10, 10') des sacs de réactifs (A, B, C, D) est réalisée sous la forme d'une soupape rotative (10') qui établit, dans une première position de rotation, une liaison par fluide entre le conduit de raccordement (6, 7, 8, 9) et le sac de réactifs (A, B, C, D) et, dans une deuxième position de rotation, une liaison par fluide (11) entre une source d'aération, de préférence de l'air de l'environnement, et le conduit de raccordement (6, 7, 8, 9).

7. Sac de réactifs (A, B, C, D) comprenant une soupape (10) disposée à l'embouchure d'un conduit de raccordement (6, 7, 8, 9), ladite soupape présentant une première position de soupape (position ouverte) et une deuxième position de soupape (position fermée), **caractérisé en ce que,** dans la position fermée, une liaison par fluide (11) est établie entre une source d'aération, de préférence de l'air de l'environnement, et le conduit de raccordement (6, 7, 8, 9).

8. Sac de réactifs (A, B, C, D) selon la revendication 7, **caractérisé en ce que** la soupape (10) présente une troisième position de soupape dans laquelle, aussi bien le sac de réactifs (A, B, C, D) que la liaison par fluide (11) à la source d'aération sont fermés.

9. Procédé pour la mise en service d'un analyseur (1) qui présente une chambre de mesure (5) et une cassette de réactifs échangeable (2) dont les sacs de réactifs (A, B, C, D) contiennent des liquides fonctionnels tels que des liquides d'étalonnage, des liquides de contrôle de la qualité, des liquides de rinçage, des liquides de nettoyage et des liquides de désinfection, **caractérisé en ce que**, pour le prélèvement d'un paquet de liquides hors d'un des sacs de réactifs (A, B, C, D), une soupape multivoie (10, 10') disposée sur le sac de réactifs est placée dans une première position de soupape (SK) dans laquelle une liaison par fluide avec le contenu du sac de réactif (A) est établie, **en ce que** le paquet de liquides est transporté dans la direction de la chambre de mesure (5), **en ce qu'**on fait passer la soupape multivoie (10, 10'), après le prélèvement de liquide, dans une deuxième position de soupape (SL), si bien que la liaison avec le contenu du sac de réactif (A) est interrompue et une liaison par fluide avec une source d'aération, de préférence de l'air de l'environnement, est établie, et également **en ce que** le milieu gazeux en provenance de la source d'aération fait l'objet d'une aspiration ultérieure, de préférence jusqu'à la chambre de mesure (5).

10. Procédé selon la revendication 9, **caractérisé en ce qu'**on fait passer la soupape multivoie (10, 10') d'au moins un sac de réactif (A, B, C, D) qui contient de préférence un liquide de nettoyage, un liquide de désinfection ou un liquide de rinçage, en alternance de la première position de soupape (SK) pour l'aspiration de liquide à la deuxième position de soupape (SL) pour l'aspiration d'un milieu gazeux, de préférence de l'air d'environnement, si bien que l'on obtient en alternance des paquets de séparation de liquides et de gaz qui sont transportés via le système de conduits de l'analyseur jusque dans la chambre de mesure (5).

11. Procédé selon la revendication 9 ou 10, **caractérisé en ce qu'**au cours du transport des paquets de séparation de liquides et de gaz, on abaisse dans un premier temps la pression régnant dans les conduits de raccordement (6, 7, 8, 9) des sacs de réactifs (A, B, C, D) guidant les gaz, de préférence via une élévation brève de la vitesse de rotation d'une pompe péristaltique (29) prévue pour le transport des liquides dans l'analyseur, avant de l'élever à nouveau, de préférence via une réduction de la vitesse de rotation de la pompe péristaltique (29) au fonctionnement normal, si bien que du liquide est introduit dans des parties des conduits de raccordement (6, 7, 8, 9) qui débouchent dans un conduit de récupération commun (12).
